**Europäisches Patentamt**

**European Patent Office**

**Office européen des brevets**

(19)

(11) Veröffentlichungsnummer : **0 343 362 B1**

(12) # EUROPÄISCHE PATENTSCHRIFT

(45) Veröffentlichungstag der Patentschrift :
**19.08.92 Patentblatt 92/34**

(51) Int. Cl.$^5$ : **H01M 4/36,** H01M 4/62, H01M 4/26

(21) Anmeldenummer : **89106572.4**

(22) Anmeldetag : **13.04.89**

(54) **Wässrige Kadmiumoxid-Paste hoher Fliessfähigkeit für die Vibrationsfüllung von Schaum- und Faserstrukturelektrodengerüsten.**

(30) Priorität : **26.05.88 DE 3817827**

(43) Veröffentlichungstag der Anmeldung :
**29.11.89 Patentblatt 89/48**

(45) Bekanntmachung des Hinweises auf die Patenterteilung :
**19.08.92 Patentblatt 92/34**

(84) Benannte Vertragsstaaten :
**ES FR GB SE**

(56) Entgegenhaltungen :
**JAPANESE PATENTS GAZETTE, week B02, 21. Februar 1979, Seite 19, J5-L, Derwent Publications Ltd, London, GB; & JP-A-53 136634 (SANYO ELECTRIC K.K.) 29-11-1978**
**PATENT ABSTRACTS OF JAPAN, Band 11, Nr. 92 (E-491)[2539], 24. März 1987; & JP-A-61 243 655 (SHIN KOBE ELECTRIC MACH. CO.LTD) 29-10-1986**
**PATENT ABSTRACTS OF JAPAN, Band 11, Nr. 292 (E-543)[2739], 19. September 1987; & JP-A-62 90 861 (SANYO ELECTRIC CO. LTD)25-04-1987**

(56) Entgegenhaltungen :
**PATENT ABSTRACTS OF JAPAN, Band 10. Nr. 297 (E-444)[2353], 9. Oktober 1986; & JP-A-61 114 475 (JAPAN STORAGE BATTERY CO.LTD) 02-06-1986**
**CHEMICAL ABSTRACTS, Band 91, 1979, Seite 136, Zusammenfassung Nr. 7355g, Columbus, Ohio, US; & JP-A-79 41 433 (MATSUSHITAELECTRIC INDUSTRIAL CO. LTD) 02-04-1979**
**PATENT ABSTRACTS OF JAPAN, Band 6, Nr. 132 (E-119)[1010], 17. Juli 1982; & JP-A-57 57 465 (FURUKAWA DENCHI K.K.)06-04-1982**
**PATENT ABSTRACTS OF JAPAN, Band 5, Nr. 11 (E-42)[683], 23. Januar 1981; & JP-A-55 139 763 (NIPPON DENCHI K.K.) 31-10-1980**

(73) Patentinhaber : **DEUTSCHE AUTOMOBILGESELLSCHAFT MBH**
**Podbielski Strasse 293**
**W-3000 Hannover (DE)**

(72) Erfinder : **Von Benda, Klaus, Dr.**
**U.v. Ensingen-Strasse 3**
**W-7440 Nürtingen (DE)**
Erfinder : **Benczur-Ürmössy, Gábor, Dr.**
**Nachtigallenweg 10b**
**W-7000 Stuttgart 1 (DE)**
Erfinder : **Berger, Gerhard, Dr.**
**Jahnstrasse 52/2**
**W-7301 Deizisau (DE)**

**EP 0 343 362 B1**

## Beschreibung

Gegenstand der Erfindung ist eine wässrige Kadmiumoxid-Paste hoher Fließfähigkeit für die Vibrationsfüllung von Schaum-und Faserstrukturelektrodengerüsten.

Technische Kadmiumelektroden für Ni/Cd-Speicherzellen werden in vielfältigen Ausführungsformen gefertigt. Die Taschenplatte enthält in perforierten vernickelten Eisenblechsegmenten sogenannte Briketts, die aus Mischungen von feinteiligem metallischem Kadmium, Eisenoxid und Graphit bestehen. Oft erzeugt man das feinteilige Kadmium durch elektrolytische Abscheidung zusammen mit Nickel aus sauren Lösungen von Kadmium- und Nickelsalz. Die elektrolytische Abscheidung kann auch direkt auf einer Trägerfolie erfolgen; die Schicht wird üblicherweise anschließend verdichtet. Bekannt sind auch Elektroden mit Kunststoffbindung aus CdO oder feinteiligem Cd auf Metallnetzen.

Sintergerüstelektroden, die für hoch belastbare offene und gasdichte Zellen bevorzugt Verwendung finden, enthalten die aktive Cd-Masse in den feinen, etwa 10 Micrometer großen Poren des Sintergerüstes. Die Imprägnierung dieser feinen Poren erfolgt durch mehrmaliges Tränken mit einer konzentrierten Kadmiumnitratlösung und Fällen von Kadmiumhydroxid in den Poren mittels Alkalilauge. Das mehrmalige Tränken und Fällen ist durch die beschränkte Löslichkeit des Kadmiumsalzes bedingt. Das Verfahren läßt sich abkürzen durch die elektrochemische Fällungsmethode (Kandler-Prozess) und führt zur Fällung von Kadmiumhydroxid und Kadmium. Die kontinuierliche Führung des Kandler-Verfahrens ist allerdings durch den verwickelten Chemismus schwierig; es wird daher nur für die Herstellung hochwertiger Elektroden eingesetzt.

Seit etwa 15 Jahren werden vermehrt Schaumstruktur- und Faserstrukturgerüste für die Formgebung der Elektrode und für die Halterung der aktiven Masse eingesetzt. Sie bestehen allein aus Metall oder sie enthalten noch den strukturgebenden Grundkörper aus Kunststoff oder Kohlenstoff.

Diese Gerüste ermöglichen eine einfache mechanische Imprägnierung mit einer verflüssigten Aktivmassenpaste. Die Poren der Gerüste sind im Gegensatz zu den Öffnungen einer Netz-oder Gitterplatte hinreichend klein, um die eingebrachte Masse zu halten. Gegenüber pulvermetallurgisch hergestellten Sintergerüsten sind die Poren jedoch größer, so daß eine geeignet eingestellte Paste praktisch vollständig eindringen und die Hohlräume füllen kann.

Als Ausgangsstoff für die Paste kommen Kadmiumoxid, Kadmiumhydroxid oder Kadmiumpulver in Frage. Die Dichte von Kadmiumhydroxid ist mit 4,8 g/cm$^3$ vergleichsweise niedrig. Damit ist auch die erreichbare Konzentration an Masse in der Elektrode gering. Kadmiumhydroxidpasten sind daher wenig geeignet. Aus Kadmiumpulver allein läßt sich keine stabile Paste formulieren, da die Metallpartikel zum Absetzen neigen. Die Dichte von Kadmiumoxid beträgt 8,15 g/cm$^3$. Diese hohe Dichte ermöglicht die Herstellung von Kadmiumelektroden mit ausreichender Kadmiumkonzentration. Kadmiumelektroden werden überwiegend in Nickel/Kadmium-Zellen verwendet. Dabei wird die erforderliche Beladung mit aktiver Masse und damit die Kapazität in Abstimmung mit der positiven Nickelelektrode getroffen. Eine moderne gasdichte Nickel/Kadmium-Satellitenzelle mit Sinterelektroden (22nd IECEC, Philadelphia, August 1987, Paper 879076, Table 1) enthält beispielsweise 12,4 g/dm$^2$ Kadmiummasse. Mit der angegebenen Plattendicke von 0,068 cm und 80 % Porosität entspricht dies 2,28 g Kadmium pro cm$^3$ Leervolumen. Auf Kadmiumoxid umgerechnet entspricht das 2,60 g Kadmiumoxid/cm$^3$. Solche Fülldichten lassen sich mit den bisher bekannten Kadmiumoxidpasten in einem Arbeitsgang nicht erreichen.

Kadmiumoxidpulver läßt sich in einigen ausgewählten organischen Flüssigkeiten mit polarem Charakter gut dispergieren. Geeignet sind z. B. Cyclohexanol, Glykolsäurebutylester oder auch Milchsäureethylester. Die Herstellung der Dispersionen mit diesen organischen Flüssigkeiten erfolgt beispielsweise in einer Messermühle. Dabei werden die losen, voluminösen Agglomerate der Kadmiumoxid-Primärpartikel zerstört. Erst dadurch erhält man flüssige Dispersionen mit bis zu 33 Vol.-% Kadmiumoxidanteil (2,69 g Kadmiumoxid/cm$^3$). Für die Füllung von Schaum- und Faserstrukturgerüsten sind diese Dispersionen jedoch nur bedingt geeignet. Einerseits beobachtet man nach wenigen Stunden Reaktionen zwischen Kadmiumoxid und Fluid, die die Fließfähigkeit verändern(z. B beim Glykolsäurebutylester), andererseits treten Entmischung und Absetzen auf (z. B. beim Cyclohexanol). Die Trocknung und die Rückgewinnung des Fluids bzw. die Entsorgung der bei der Trocknung entstehenden Lösemitteldämpfe ist technisch problematisch und kostentreibend.

Mit Wasser als Fluid erreicht man bestenfalls eine Konzentration von 21 Vol.-% Kadmiumoxid. Im Verlauf von wenigen Stunden dicken solche Pasten als Folge der Reaktion von Kadmiumoxid und Wasser zu Kadmiumhydroxid ein. In der japanischen Offenlegungsschrift (Japan Kokai Tokkyo Koho) 78 13 6634 wird eine wässrige Kadmiumoxidpaste mit 14 Vol.-% Kadmiumoxid beschrieben, bei der die Reaktion des Kadmiumoxid mit dem Wasser durch. Zusatz von Natriumhydrogenphosphat, Natriumpyrophosphat oder Natriumhexametaphosphat inhibiert wird. Diese Paste ist zur Erzielung hoher Fülldichten bei einmaliger Füllung ebensowenig geeignet wie die in DE-PS 1596023 beschriebene Kadmiumoxid-paste in 30 %iger KOH als Suspensionsfluid. Bekanntlich reagiert Kadmiumoxid in wässriger KOH in wenigen Minuten in exothermer Reaktion zu Kadmiumhydroxid.

Die Aufgabe der Erfindung besteht darin, eine wässrige Kadmiumoxid-Paste zu finden, die eine so hohe Fließfähigkeit besitzt, daß die Poren von Schaum- und Faserstrukturelektrodengerüsten vollständig von ihr gefüllt werden können und die andererseits einen so hohen Kadmiumoxidgehalt besitzt, daß die vollständige Füllung des porösen Körpers in einem Arbeitsschritt gelingt.

Diese Aufgabe wird durch die in Patentanspruch 1 beschriebene wässrige Kadmiumoxidpaste gelöst.

Die Paste besitzt somit einen Kadmiumoxid-Gehalt von 25 bis 35 Vol.-%, einen pH-Wert von 10 bis 12,5, einen Gehalt von 0,5 bis 2,5 Gew.-%, bezogen auf Kadmiumoxid an einem oder mehreren Dispergatoren aus der Gruppe der wasserlöslichen Salze der Polyphosphorsäuren, der Di- und Polyphosphonsäuren und ihrer Derivate, der Glukonsäure oder Alkaliantimonyltartrat, ferner besitzt die Paste eine plastische Viskosität von 0,1 bis 1 Pa.s und eine Fließgrenze zwischen 10 und 120 Pa.

Rheologisch gesehen gehört die erfindungsgemäße Kadmiumoxid-paste zu den plastischen Körpern. Meist wird ein idealplastisches Verhalten gefunden (sogenannte Bingham-Körper). Die Viskosität ist keine Materialkonstante, sie läßt sich nur in einem Schubspannungs/Geschwindigkeitsgefälle-Fließdiagramm darstellen. Unterhalb einer bestimmten Schubspannung ist die Paste fest, der Wert entspricht der Fließgrenze. Nach Überschreiten der Fließgrenze besteht beim idealplastischem Verhalten Linearität zwischen Schubspannung und Geschwindigkeitsgefälle. Die sogenannte plastische Viskosität ist der Quotient aus der durch die Fließgrenze verminderten Schubspannung und dem Geschwindigkeitsgefälle. Die Fließgrenze und die plastische Viskosität beschreiben das System vollständig. Zur Erläuterung der rheologischen Begriffe und Meßverfahren sei auf die Contraves Firmenschrift "Messung rheologischer Eigenschaften" (Bulletin T 990 d-7309), Sektion 6.3 (Plastisches Fließverhalten) sowie auf die Veröffentlichung von A. Fincke und W. Heinz "Zur Bestimmung der Fließgrenze grobdisperser Systeme", Rheologica Acta, 1 (1961), 530, hingewiesen.

Die Messungen erfolgten mit dem Rotationsviskosimeter Rotovisco RV 12 der Fa. Haake mit den Meßeinrichtungen NV und MV I. Es sollten Schergeschwindigkeiten (Geschwindigkeitsgefälle) von mindestens 100/s erreicht werden. Zur Auswertung wurde die Rücklaufkurve herangezogen. Die Messungen erfolgten bei 20 °C. Die Paste ist für die Vibrationsfüllmethode geeignet, wenn die Fließgrenze zwischen 10 und 120 Pa liegt und die plastische Viskosität 0,1 bis 1 Pa.s beträgt.

Die Paste soll bevorzugt eine leichte Thixotropie (Zeitabhängigkeit der Viskosität) aufweisen. Nach dem Füllvorgang soll die Paste noch eine Weile flüssig bleiben, um eine Entfernung überschüssiger Paste von der Oberfläche des gefüllten Körpers zu erleichtern. Sie soll allerdings nicht so flüssig sein, daß sie wieder aus den Poren austreten und störende Ablauftropfen bilden kann. Diese Bedingungen werden erreicht, wenn Fließgrenze und Viskosität innerhalb der beanspruchten Werte liegen.

Um die hohe Konzentration von 25 bis 35 Vol.-% Kadmiumoxid (2 bis 2,85 g Kadmiumoxid /cm$^3$) in der Paste bei gleichzeitiger Erfüllung der rheologischen Forderungen zu erreichen, werden hochwirksame Dispergatoren benötigt. Geeignet sind Dispergatoren aus der Gruppe der wasserlöslichen Salze, insbesondere der Alkalisalze der Polyphosphorsäuren, der Di und Polyphosphonsäuren und ihrer Derivate, der Glukonsäure oder auch Alkaliantimonyltartrat. Diese Dispergatoren kommen in Mengen von 0, 5 bis 2,5 Gew.-%, bezogen auf Kadmiumoxid, zur Anwendung. Sie wirken nach Feststellung der Anmelderin sowohl als Dispergator wie als Inhibitor der Reaktion zwischen CdO und Wasser. Die Wirksamkeit als Dispergator wie als Inhibitor nimmt bei den Polyphosphaten mit der Kettenlänge zu. Daher werden Polyphosphate mit 2 bis 20, insbesondere solche mit 6 bis 20 Phosphoratomen bevorzugt.

Eine besonders wirksame Gruppe an Dispergatoren bilden auch die Di- und Polyphosphonsäuren und ihre Derivate. Da die Kohlenstoffatome der Di- und Polyphosphonsäuren durch die Lade- und Entladevorgänge an der Elektrode zu Kohlendioxid abgebaut werden, werden bevorzugt solche Di- und Polyphosphonsäuren eingesetzt, bei denen das Verhältnis von C-Atomen zu P-Atomen nicht größer als 2 ist, um die Karbonatbildung in der Zelle möglichst gering zu halten. Ganz besonders gut geeignet und auch preiswert im Handel erhältlich sind die wasserlöslichen Salze der 1-Hydroxiethan-1,1-diphosphonsäure oder der Aminotrismethylenphosphonsäure. Es ist bekannt, daß Nickel in geringen Mengen eine günstige Spreizwirkung in der Kadmiumelektrode entfaltet. Diese Mengen Nickel lassen sich besonders günstig in die Elektrode einbringen, wenn man als Dispergator einen Alkalimetall-Nickel-Komplex der 1-Hydroxiethan-1,1-diphosphonsäure (HEDP) verwendet. In dieser Form der Einbringung in die aktive Masse wird eine besonders feine, gleichmäßige Verteilung erzielt. Innerhalb der allgemeinen Formel $Ni_xM_yH_z$(HEDP) mit $2x + y + z = 4$ (M = Alkalimetall) sind folgende Bandbreiten zulässig: x = 0,5 bis 1,2; y = 1 bis 2,5; z = 0 bis 1. Die Herstellung eines entsprechenden Dispergators erfolgt durch Auflösen von Nickelhydroxid in der freien Säure $H_4$ (HEDP) und Zugabe von Alkalilauge. Weitere geeignete Dispergatoren sind die Salze, insbesondere die Alkalisalze der Gluconsäure sowie Alkaliantimonyltartrat. Selbstverständlich können auch Gemische der Dispergatoren zur Anwendung kommen.

Der pH-Wert aller Pasten ist durch einen Alkalisierungseffekt gegenüber dem pH-Wert der Dispergierlösungen nach höheren Werten verschoben. Damit die erforderlichen Viskositätsdaten eingehalten werden können, muß der pH-Wert zwischen 10 und 12,5 liegen.

Die Paste kann auch pulverförmiges Nickelhydroxid als Spreizmittel in Mengen von 0,25 bis 3 Mol.-%, bezogen auf Kadmium, enthalten. Ein Teil der Aktivmasse kann auch aus Kadmiumpulver bestehen. Die Kadmiumoxidpaste enthält dann ein Gewichtsteil metallisches Kadmiumpulver auf 1 bis 15 Gewichtsteile Kadmiumoxid. Diese Variante ist besonders für gasdichte Nickel/Kadmium-Zellen interessant, da sie nach dem Zusammenbau sogleich verschlossen und formiert werden können. Das eingebrachte Kadmium dient dann als Entladereserve (precharge).

Die Herstellung der Paste erfolgt in den in der Technik gebräuchlichen Dispergiereinrichtungen. Bevorzugt werden Messermühlen und Kugelmühlen. Die Paste muß bis zum Erreichen der beanspruchten rheologischen Kenndaten geschert werden. In Messermühlen werden etwa 1 bis 5 Minuten Einwirkungsdauer vorgesehen. In Kugelmühlen dauert die Herstellung der Paste 1 bis 8 Stunden. Bei pulverförmigen Kadmiumoxid-Ausgangsmaterial werden dabei die voluminösen Aggregate zerstört. Geht man von pelletierten Kadmiumoxid aus, können die Zeiten verkürzt werden, da die Verdichtungsarbeit bereits beim Pelletieren geleistet wurde. Pasten, bei denen die beanspruchten Parameter eingehalten werden, sind geeignet, Elektrodengerüste mit Schaum- und Faserstruktur in einem Arbeitsgang zu füllen. Die Pasten sind gut verarbeitbar und behalten ihre rheologischen und sonstigen Eigenschaften über einen längeren Zeitraum.

Beispiel 1:

400 g Kadmiumoxid (32,8 Vol.-%) in pelletierter Form, 3 g Nickelhydroxid (0,5 Vol.-%) und 100 ml (66,7 Vol.-%) einer wässrigen Lösung, die 20 g/l eines handelsüblichen Alkalipolyphosphatgemisches (Calgon® N, Firma Benckiser-Knapsack) enthielt,wurden im Mischbehälter eine Messermühle zwei Minuten geschert. Es entstand eine Kadmiumoxid-Paste, die durch Gießen aus dem Behälter entleert werden konnte. Aus der Fließkurve der frisch hergestellten Paste wurden durch Extrapolation und Ausgleichsrechnung folgende rheologische Daten ermittelt (Meßeinrichtung NV, maximales Geschwindigkeitsgefälle 122/s): Fließgrenze = 12 Pa, plastische Viskosität = 0,19 Pa.s. Der Kadmiumoxidgehalt der Paste beträgt 2,67 g/cm$^3$.

Beispiel 2:

Als Dispergierlösung diente eine 0,1-molare Lösung der Zusammensetzung Ni$_{l,2}$ K$_{1,6}$ (HEDP). Zur Herstellung von 1 l dieser Lösung wurden 34,33 g 60-%ige 1-Hydroxiethan-1,1-diphosphonsäure (Turpinal® SL, Firma Henkel) in ein Becherglas eingewogen und ca. 800 ml entionisiertes Wasser zugegeben. 11,13 g Nikkelhydroxid wurden unter Rühren und Erwärmen auf 70 °C darin gelöst. Nach Abkühlen wurden dieser Lösung unter Rühren 20 g 47-%ige KOH zugegeben, wodurch der pH-Wert auf 8 anstieg. Die Lösung wurde auf 1 l aufgefüllt.

700 g Kadmiumoxidpulver (23,4 Vol.-%), 234,5 g Kadmiumpulver (7,4 Vol.-%, Fa. Zinchem) und 254 ml (69,2 Vol.-%) obiger Dispergierlösung wurden in einer 1 l-Porzellankugelmühle unter Verwendung von 400 g Porzellankugeln mit 16 mm Durchmesser zwei Stunden mit 70 Umdrehungen/min gerollt. Die entstandene Paste enthält insgesamt 2,31 g/cm$^3$ Kadmium. Aus der Fließkurve der Paste wurden folgende rheologische Daten erhalten (Meßeinrichtung NV, maximales Geschwindigkeitsgefälle 173/s): Fließgrenze = 22 Pa, plastische Viskosität = 0,28 Pa.s. Der pH-Wert der Paste betrug 11,9.

**Patentansprüche**

1. Wässrige CdO-Paste hoher Fließfähigkeit für die Vibrationsfüllung von Schaum- und Faserstrukturelektrodengerüsten **gekennzeichnet** durch
   a) einen CdO-Gehalt von 25 bis 35 Vol. %,
   b) einen pH-Wert von 10 bis 12,5
   c) einen Gehalt von 0,5 bis 2,5 Gew. %, bezogen auf CdO, an einem oder mehreren Dispergatoren aus der Gruppe der wasserlöslichen Salze der Polyphosphorsäuren, der Di- und Poly-Phosphonsäuren und ihrer Derivate, der Gluconsäure oder an Alkaliantimonyltartrat,
   d) eine plastische Viskosität von 0,1 bis 1 Pa.s und eine Fließgrenze zwischen 10 und 120 Pa.
2. Wässrige CdO-Paste nach Anspruch 1,
**dadurch gekennzeichnet,**
daß bei den als Dispergatoren verwendeten Di- und Polyphosphonsäuren das Verhältnis von C-Atomen zu P-Atomen nicht größer als 2 ist.
   3. Wässrige CdO-Paste nach Anspruch 1 oder 2,

**dadurch gekennzeichnet,**
daß als Dispergatoren wasserlösliche Salze der 1-Hydroxiethan-1,1-disphosphonsäure oder der Aminotrismethylenphosphonsäure verwendet werden.

4. Wässrige CdO-Paste nach Anspruch 1,
**dadurch gekennzeichnet,**
daß als Dispergatoren Polyphosphate mit 2 bis 20, insbesondere mit 6 bis 20 P-Atomen verwendet werden.

5. Wässrige CdO-Paste nach einem oder mehreren der Ansprüche 1 bis 5,
**dadurch gekennzeichnet,**
daß die Dispergatoren in Form ihrer Alkalisalze vorliegen.

6. Wässrige CdO-Paste nach Anspruch 3,
**dadurch gekennzeichnet,**
daß der Dispergator ein Nickelsalz der 1-Hydroxiethan-1,1-diphosphonsäure (HEDP) der Formel $Ni_xM_yH_z$ (HEDP) ist, worin M ein Alkalimetall bedeutet, $2x + y + z = 4$ ist und x Werte zwischen 0,5 und 1,2, y Werte zwischen 1 und 2,5 und z Werte zwischen 0 und 1 annehmen können, insbesondere $Nil_{,2}M_{1,6}$ (HEDP).

7. Paste nach Anspruch 1 bis 6
**dadurch gekennzeichnet,**
daß sie neben dem löslichen Nickelsalz der HEDP-Säure festes $Ni(OH)_2$ enthält

8. Paste nach Anspruch 1 bis 7,
**dadurch gekennzeichnet,**
daß das molare Verhältnis von Nickelhydroxid zu gelöstem Nickel 1 zu 1 bis 10 zu 1 beträgt.

## Claims

1. Aqueous CdO paste of high flowability for the vibration filling of foam-structure and fibre-structure electrode frameworks, characterized by
   a) a CdO content of 25 to 35% by volume,
   b) a pH of 10 to 12.5,
   c) a content of 0.5 to 2.5% by weight, based on CdO, of one or more dispersants from the group comprising the water-soluble salts of polyphosphoric acids, di- and polyphosphonic acids and their derivatives, gluconic acid or of alkali antimonyl tartrate,
   d) a plastic viscosity of 0.1 to 1 Pa.s and a yield value of between 10 and 120 Pa.

2. Aqueous CdO paste according to Claim 1, characterized in that the ratio of C atoms to P atoms in the di- and polyphosphonic acids used as dispersants does not exceed 2.

3. Aqueous CdO paste according to Claim 1 or 2, characterized in that water-soluble salts of 1-hydroxyethane-1,1-diphosphonic acid or aminotrismethylphosphonic acid are used as dispersants.

4. Aqueous CdO paste according to Claim 1, characterized in that polyphosphates containing 2 to 20, in particular containing 6 to 20, P atoms are used as dispersants.

5. Aqueous CdO paste according to one or more of Claims 1 to 5, characterized in that the dispersants are in the form of their alkali salts.

6. Aqueous CdO paste according to Claim 3, characterized in that the dispersant is a nickel salt of 1-hydroxyethane-1,1-diphosphonic acid (HEDP) of the formula $Ni_xM_yH_z$, (HEDP), where M is an alkali metal, $2x + y + z = 4$ and x may assume values between 0.5 and 1.2, y may assume values between 1 and 2.5 and z may assume values between 0 and 1, in particular $Ni_{1.2}M_{1.6}$ (HEDP).

7. Paste according to Claims 1 to 6, characterized in that it contains solid $Ni(OH)_2$ in addition to the soluble nickel salt of HEDP acid.

8. Paste according to Claims 1 to 7, characterized in that the molar ratio of nickel hydroxide to dissolved nickel is 1:1 to 10:1.

## Revendications

1. Pâte aqueuse d'oxyde de cadmium à haute fluidité, destinée à remplir par vibration des bâtis d'électrodes à structure fibreuse et alvéolaire, caractérisée par:
   a) une teneur en oxyde de cadmium de 25 à 30% (en volume),
   b) un pH de 10 à 12,5
   c) une teneur de 0,5 à 2,5% (en poids), par rapport à la teneur en oxyde de cadmium, en un ou plusieurs agents dispersants du groupe des sels solubles dans l'eau des acides polyphosphoriques, des acides di- et polyphosphonés et de leurs dérivés, de l'acide gluconique ou du tartrate d'antimoine alcalin,

d) une viscosité plastique de 0,1 à 1 Pa.s et une limite de liquidité comprise entre 10 et 120 Pa.

2. Pâte aqueuse d'oxyde de cadmium selon la revendication 1, caractérisée en ce que, dans les acides di- et polyphosphonés utilisés comme agents dispersants, le rapport des atomes de carbone aux atomes de phospore n'est pas supérieur à 2.

3. Pâte aqueuse d'oxyde de cadmium selon la revendication 1 ou 2, caractérisée en ce qu'on utilise comme agents dispersants des sels solubles dans l'eau de l'acide 1-hydroxyéthane-1,1 disphosphonique ou de l'acide aminotrisméthylène phosphonique.

4. Pâte aqueuse d'oxyde de cadmium selon la revendication 1, caractérisée en ce qu'on utilise comme agents dispersants des polyphosphates avec 2 à 20 et notamment 6 à 20 atomes de phosphore.

5. Pâte aqueuse d'oxyde de cadmium selon l'une des revendications 1 à 4, caractérisée en ce que les agents dispersants sont présents sous la forme de leurs sels alcalins.

6. Pâte aqueuse d'oxyde de cadmium selon la revendication 3, caractérisée en ce que l'agent dispersant est un sel de nickel de l'acide 1-hydroxyéthane-1,1 disphosphonique (HEDP) de formule $Ni_xM_yH_z$ (HEDP), où M désigne un métal alcalin, $2x + y + z = 4$ et x peut prendre des valeurs comprises entre 0,5 et 1,2, y des valeurs comprises entre 1 et 2,5 et z des valeurs comprises entre 0 et 1, notamment de formule $Ni_{1,2}M_{1,6}$ (HEDP).

7. Pâte selon l'une des revendications 1 à 6, caractérisée en ce qu'elle contient, outre le sel de nickel soluble dans l'eau de l'acide HEDP, du $Ni(OH)_2$ à l'état solide.

8. Pâte selon l'une des revendications 1 à 7, caractérisée en ce que le rapport molaire de l'hydroxyde de nickel au nickel dissous est de 1:1 à 10:1.